# FASCICULE DE BREVET EUROPEEN

(11) **EP 0 439 973 B1**
(45) Date de publication et mention de la délivrance du brevet: **16.06.1993**
(21) Numéro de dépôt: 90403579.7
(22) Date de dépôt: 13.12.1990
(51) Int. Cl.: B60T 13/12, B60T 13/14

(54) **Dispositif d'assistance hydraulique pour circuit de freinage**
Hydraulische Hilfsanlage für Bremskreis
Hydraulic assistance device for a brake system

(30) Priorité: 31.01.1990 FR 9001118
(43) Date de publication de la demande: 07.08.1991
(73) Titulaire: ALLIEDSIGNAL EUROPE SERVICES TECHNIQUES, 93700 Drancy (FR)
(72) Inventeur: Kervagoret, Gilbert, BENDIX EUROPE SERVICES TECHN., F-93700 Drancy (FR)

(56) Documents cités:
- EP-A- 0 288 349
- FR-A- 2 164 879
- FR-A- 2 391 884
- FR-A- 2 407 846

## Description

La présente invention concerne les dispositifs d'assistance hydraulique pour circuit de freinage de véhicules automobiles.

Un tel dispositif est, par exemple, décrit dans le document EP-A-0 288 349 auquel on se référera à propos de son fonctionnement.

On sait qu'un tel dispositif comprend un corps percé d'un alésage dans lequel coulissent coaxialement un poussoir commandé par une pédale de frein et un moyen de piston placé entre des première et deuxième chambres contenant un fluide de freinage, la première chambre recevant au moins un ressort qui charge le poussoir et le moyen de piston à l'écart l'un de l'autre, les première et deuxième chambres étant raccordées à des sources de fluide sous basse pression et sous haute pression par des moyens de valve.

Le ressort prévu dans la première chambre constitue un simulateur de course pour la pédale qui est liée au poussoir généralement au moyen d'un mécanisme formant levier.

Lorsque la pédale est enfoncée, le ressort de la première chambre est comprimé. L'énergie emmagasinée dans ce ressort est restituée lorsque le conducteur relâche son effort sur la pédale.

S'il relâche cet effort doucement, le mouvement en retour du poussoir est amorti par le pied du conducteur. Par contre, si le conducteur se contente de relâcher brusquement son effort, par exemple par glissement du pied hors de la pédale, l'énergie emmagasinée dans le ressort va être brutalement transférée en énergie cinétique à l'ensemble poussoir-pédale-mécanisme formant levier, laquelle devra être absorbée par les liaisons mécaniques entre ces pièces.

Dans certains cas, ceci peut entraîner une dégradation ou une destruction de ces liaisons.

L'invention a donc pour but d'obvier à cet inconvénient en assurant un amortissement du mouvement de retour de l'ensemble sans altérer anormalement le temps de défreinage ni dégrader la sensation reçue par le conducteur.

Dans ce but, selon l'invention, une chambre auxiliaire à volume variable en fonction de la position du poussoir, ménagée dans l'alésage, communique avec la première chambre, d'une part en permanence par l'intermédiaire d'une restriction et d'autre part par l'intermédiaire d'un moyen auxiliaire de valve autorisant la communication lors de l'augmentation de volume de la chambre auxiliaire et l'interdisant lors de la diminution de celui-ci.

Plusieurs modes de réalisation font l'objet des sous-revendications annexées.

L'invention sera mieux comprise et d'autres buts, avantages et caractéristiques de celle-ci apparaîtront plus clairement à la lecture de la description qui suit de plusieurs modes de réalisation donnés à titre non limitatif et à la lumière des dessins annexés sur lesquels :
- la Figure 1 représente schématiquement en coupe un dispositif d'assistance hydraulique pour circuit de freinage selon un premier mode de réalisation,
- les Figures 2 et 3 illustrent schématiquement en vue partielle agrandie deux variantes du mode de réalisation représenté Figure 1,
- la Figure 4 représente schématiquement en coupe un dispositif selon un deuxième mode de réalisation de l'invention,
- la Figure 5 illustre en vue partielle agrandie un détail de réalisation du mode présenté Figure 4,
- la Figure 6 représente schématiquement en coupe un dispositif selon un troisième mode de réalisation de l'invention,
- la Figure 7 illustre en vue partielle agrandie un détail de réalisation du mode présenté Figure 6, et
- la Figure 8 représente schématiquement en coupe un dispositif selon un quatrième mode de réalisation de l'invention.

En référence maintenant aux Figures, on n'a pas représenté dans sa totalité le dispositif d'assistance hydraulique dont la description complète fait l'objet du document précité. La partie représentée est la partie essentielle pour l'invention.

Le dispositif comprend un corps 30 percé d'un alésage 32 dans lequel coulissent coaxialement un poussoir 25 et un piston 34. La pédale de freinage, non représentée, est fixée à l'extrémité 16 du poussoir 25 faisant saillie de l'alésage 32.

Dans les exemples représentés, deux ressorts 51 et 52, disposés dans la première chambre 5, repoussent le piston 34 et le poussoir 25 en écart l'un de l'autre. Un bouchon 8 forme butée à l'intérieur de l'alésage 32 pour le poussoir 25. Le poussoir 25 est pourvu d'un perçage borgne 7 communiquant avec la première chambre 5.

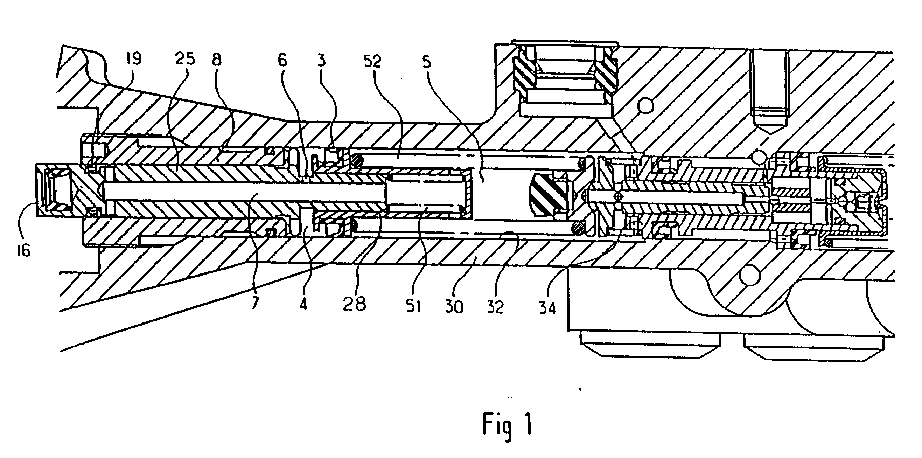

En référence aux Figures 1 à 3, une chambre auxiliaire 4 est ménagée entre le poussoir 25 et l'alésage 32, et communique avec la première chambre 5 par l'intermédiaire d'une ouverture 6 et du perçage 7.

Un joint d'étanchéité unidirectionnelle 3 est fixé au poussoir 25 et sépare la chambre auxiliaire et la première chambre 5.

Ce joint 3 est une coupelle élastique dont la lèvre est située dans la chambre auxiliaire 4.

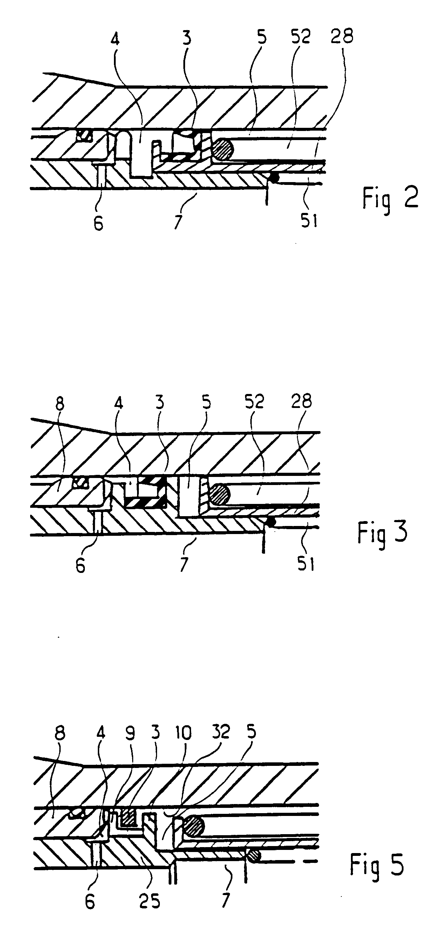

Le mode de réalisation illustré comportant deux ressorts de compression pour simuler la course de la pédale selon deux lois différentes, on peut indifféremment fixer le joint 3 soit directement sur le poussoir 25 comme illustré Figure 3 ou bien indirectement par l'intermédiaire du cylindre 28 qui constitue la pièce intermédiaire entre les deux ressorts 51,52, comme représenté Figure 2, en fonction du type d'amortissement désiré.

Le fonctionnement du dispositif est le suivant.

Au repos, la chambre 5 est emplie de fluide de frein sous basse pression. Lorsque la pédale est enfoncée, le poussoir 25 coulisse vers la droite (sur les Figures), comprimant d'abord le ressort 51 et le ressort 52 dont les raideurs sont généralement différentes, jusqu'à la mise en butée des pièces. Il se crée une dépression dans la chambre auxiliaire 4. Le fluide de la chambre 5 passe alors par le perçage 7 et l'ouverture 6 pour pénétrer dans la chambre auxiliaire 4 dont le volume augmente. La lèvre de la coupelle 3 s'écarte créant ainsi un chemin complémentaire au flux de fluide vers la chambre 4. La sensation reçue à la pédale par le conducteur n'est donc pas dégradée.

Lorsque le conducteur relâche son effort sur la pédale de frein, l'énergie emmagasinée dans les ressorts 51,52 tend à ramener le poussoir 25 dans sa position de repos illustrée. Toutefois, le fluide de frein emprisonné dans la chambre auxiliaire 4 ralentit le mouvement de retour du poussoir 25. En effet, la coupelle 3 est alors étanche et interdit tout flux de fluide de la chambre auxiliaire 4 vers la première chambre 5. Le fluide doit alors s'échapper par l'ouverture 6 qui constitue une restriction dont le diamètre détermine le temps de retour du poussoir.

Le retour du poussoir étant ainsi ralenti, les liaisons mécaniques entre le poussoir et la pédale ne reçoivent pas de chocs violents, ce qui évite leur dégradation.

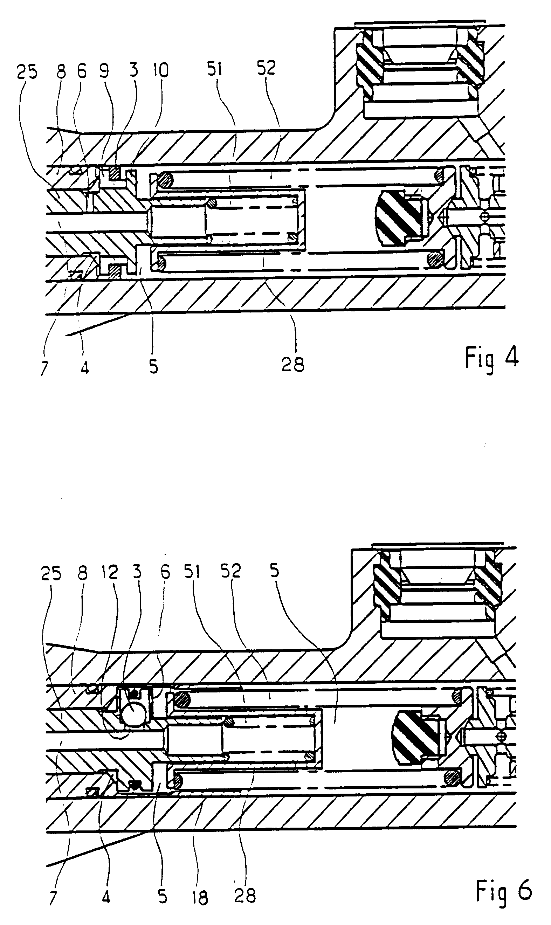

Le mode de réalisation de la Figure 4 diffère de celui des Figures 1 à 3 par la nature du joint d'étanchéité unidirectionnelle utilisé. En effet, Figures 4 et 5, ce joint est constitué par un segment annulaire 3 serré dans l'alésage 32, monté flottant entre deux butées 9 et 10 prévues à la périphérie du poussoir 25. La butée 9, en regard de la chambre 4, est percée de manière à ménager des passages pour le fluide de freinage, tandis que la butée 10, en regard de la chambre 5 est pleine.

Lors du déplacement du poussoir vers la droite (sur la Figure 4), le joint 3 s'appuie sur la butée percée 9, ce qui ménage un passage pour le fluide de freinage entre la chambre 5 et la chambre 4 par l'intermédiaire de l'espace laissé libre entre l'extrémité de la butée 10 et l'alésage 32. Au retour du poussoir, le joint 3 s'appuie sur la butée pleine 10 fermant ainsi l'espace précité et interdisant tout flux de fluide entre les chambres 4 et 5 par ce chemin. Le fluide doit alors passer par l'orifice 6 qui constitue la restriction précitée.

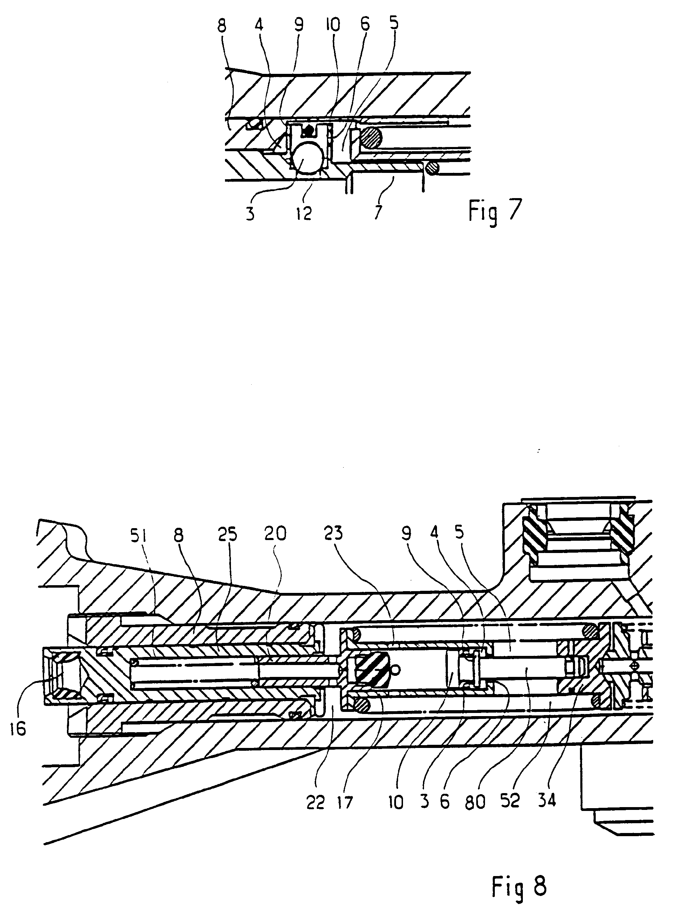

Le mode de réalisation représenté Figures 6 et 7 diffère également des précédents notamment par le joint d'étanchéité unidirectionnelle mis en oeuvre. En effet, Figures 6 et 7, le joint 3 est constitué par une bille fermant, au repos, une ouverture 12 ménagée entre la chambre 4 et le conduit 7. Lorsque le poussoir 25 est déplacé vers la droite (sur la Figure), la bille 3 se soulève et le fluide pénètre dans la chambre 4. Une cage 9,10 est judicieusement formée dans le poussoir 25 pour guider la bille. Au retour du poussoir, la bille 3 est poussée sur son siège par la pression dans la chambre 4 et ferme l'orifice 12, interdisant tout flux du fluide par ce chemin. Le fluide doit alors circuler par l'orifice 6 et l'espace entre la butée 10 et la paroi interne de la chambre qui constituent ensemble la restriction précitée.

Dans l'exemple représenté, l'orifice 6 est pratiqué sur une paroi 10 de la cage à bille, mais il aurait pu être pratiqué conformément aux enseignements des Figures précédentes.

L'exemple représenté Figures 6 et 7 diffère également des précédents en ce que le bouchon 8 est pourvu d'une jupe 18, la chambre auxiliaire 4 étant alors définie périphériquement par cette jupe 18 faisant saillie du bouchon 8 vers l'intérieur du dispositif. En modifiant l'épaisseur de cette jupe 18, on modifie la valeur de la restriction et on peut donc faire varier la vitesse de retour du poussoir en fonction de sa position.

Le mode de réalisation représenté Figure 8 est quelque peu différent des précédents, en ce que la chambre auxiliaire est située à l'intérieur de la première chambre 5, les deux ressorts 51 et 52 étant alignés et non l'un au milieu de l'autre. Le piston 34 est pourvu d'une tige 80 dont l'extrémité libre 10 pénètre dans un cylindre 17 relié au poussoir 25, ici au moyen d'une pièce intermédiaire 20 disposée entre les deux ressorts. Le volume entre la pièce intermédiaire 20 et l'extrémité libre 10 de la tige 80 communique avec la première chambre 5 par l'intermédiaire de perçages 23.

Un joint d'étanchéité unidirectionnelle 3 est disposé à l'extrémité libre de la tige 80 de manière à autoriser un flux de fluide lorsque le poussoir 25 se déplace vers la droite (sur la Figure) et interdire le flux inverse au retour du poussoir.

A ce moment-là, seul l'espace disponible 6 entre la paroi de la tige 80 et l'extrémité libre du cylindre détermine un chemin pour le flux de fluide s'échappant de la chambre 4 vers la chambre 5 et constitue la restriction.

Sur l'exemple représenté, le joint 3 est du type coupelle élastique telle qu'utilisée dans le mode de réalisation des Figures 1, 2 et 3, mais il pourrait aussi bien être du type à segment flottant tel qu'utilisé dans le mode de réalisation des Figures 4 et 5.

Il faut noter que dans l'exemple représenté Figure 8, seul le mouvement du à l'énergie emmagasinée dans le ressort 52 est amorti.

Bien évidemment, l'homme du métier pourra apporter de nombreuses modifications à la présente invention sans sortir du cadre de l'invention tel que défini par les revendications annexées.

## Revendications

1. Dispositif d'assistance hydraulique pour circuit de freinage, comprenant un corps (30) percé d'un alésage (32) dans lequel coulissent coaxialement un poussoir (25) commandé par une pédale de frein et un moyen de piston (34) placé entre des première (5) et deuxième chambres contenant un fluide de freinage, la première chambre (5) recevant au moins un ressort (51,52) qui charge le poussoir (25) et le moyen de piston (34) à l'écart l'un de l'autre, les première et deuxième chambres étant raccordées à des sources de fluide sous basse pression et sous hautre pression par des moyens de valve, caractérisé en ce que une chambre auxiliaire (4) à volume variable en fonction de la position du poussoir (25), ménagée dans ledit alésage (32), communique avec ladite première chambre (5), d'une part en permanence par l'intermédiaire d'une restriction (6) et d'autre part par l'intermédiaire d'un moyen auxiliaire de valve (3) autorisant la communication lors de l'augmentation de volume de la chambre auxiliaire (4) et l'interdisant lors de la diminution de celui-ci.

2. Dispositif selon la revendication 1, caractérisé en ce que ladite chambre auxiliaire (4) est une chambre annulaire ménagée entre ledit poussoir (25) et l'alésage (32) et est séparée de ladite première chambre (5) par un joint d'étanchéité unidirectionnelle (3).

3. Dispositif selon la revendication 2, caractérisé en ce que le joint d'étanchéité unidirectionnelle (3) est constitué par une bille logée dans ladite chambre auxiliaire (4) et susceptible de fermer un conduit (12) pratiqué entre la première chambre (5) et la chambre auxiliaire (4).

4. Dispositif selon la revendication 1, caractérisé en ce que ladite chambre auxiliaire (4) est ménagée à l'intérieur de la première chambre (5) et est déterminée par le volume prévu entre une tige (80) coulissant dans un cylindre (17), tige et cylindre étant fixés l'un au piston (34) et l'autre au poussoir (25) éventuellement au moyen d'une pièce intermédiaire (20), l'extrémité libre (10) de la tige (80) portant un joint d'étanchéité unidirectionnelle (3), l'espace (6) entre l'extrémité libre du cylindre (17) et la paroi de la tige (80) formant ladite restriction.

5. Dispositif selon la revendication 2 ou 4, caractérisé en ce que le joint d'étanchéité unidirectionnelle (3) est une coupelle élastique dont la lèvre est située dans ladite chambre auxiliaire (4).

6. Dispositif selon la revendication 2 ou 4, caractérisé en ce que le joint d'étanchéité unidirectionnelle (3) est un segment annulaire serré dans ledit alésage (32) et flottant entre deux butées (9,10) prévues à la périphérie dudit poussoir (25) entre la première chambre (5) et la chambre auxiliaire (4), la butée (9) en regard de la chambre auxiliaire (4) étant percée, tandis que celle (10) en regard de la première chambre (5) est pleine.

## Patentansprüche

1. Hydraulische Hilfsanlage für einen Bremskreis, mit einem von einer Bohrung (32) durchsetzten Körper (30), in dem koaxial ein durch ein Bremspedal gesteuerter Stößel (25) und ein Kolbemnmittel (34) gleiten, das zwischen eine erste (5) und eine zweite Kammer gesetzt ist, die ein Bremsfluid enthalten, wobei die erste Kammer (5) wenigstens eine Feder (51, 52) aufnimmt, die den Stößel (25) und das Kolbenmittel (34) voneinander im Abstand vorspannt, wobei die erste und die zweite Kammer durch Ventilmittel an Quellen mit Fluid unter Nieder- und Hochdruck angeschlossen sind, dadurch gekennzeichnet, daß eine in der Bohrung (32) ausgebildete Hilfskammer (4) mit in Abhängigkeit von der Position des Stößels (25) variablem Volumen mit der ersten Kammer (5) einerseits ständig über eine Drosselstelle (6) in Verbindung steht und andererseits über ein Hilfsventilmittel (3), das die Verbindung bei der Volumenerhöhung der Hilfskammer (4) zuläßt und die Verbindung bei der Volumenverminderung verbietet.

2. Vorrichtung nach Anspruch 1, dadurch gekennzeichnet, daß die Hilfskammer (4) eine zwischen dem Stößel 25 und der Bohrung (32) vorgesehene, ringförmige Kammer ist, und daß sie von der ersten Kammer (5) durch eine Einwegdichtung (3) getrennt ist.

3. Vorrichtung nach Anspruch 2, dadurch gekennzeichnet, daß die Einwegdichtung (3) durch eine Kugel gebildet ist, die in der Hilfskammer (4) aufgenommen und in der Lage ist, eine Leitung (12) zu verschließen, die zwischen der ersten Kammer (5) und der Hilfskammer (4) ausgebildet ist.

4. Vorrichtung nach Anspruch 1, dadurch gekennzeichnet, daß die Hilfskammer (4) im Inneren der ersten Kammer (5) vorgesehen ist, und daß sie durch das zwischen einer in einem Zylinder (17) gleitendem Stange (80) vorgesehene Volumen bestimmt ist, wobei die Stange an dem Kolben (34) und der Zylinder, möglicherweise mittels eine Zwischenstücks (20), an dem Stößel (25) befestigt sind, wobei das freie Ende (10) der Stange (80) eine Einwegdichtung (3) trägt und der Raum (6) zwischen dem freien Ende des Zylinders (17) und der Wand der Stange (80) die Drosselstelle bildet.

5. Vorrichtung nach Anspruch 2 oder 4, dadurch gekennzeichnet, daß die Einwegdichtung (3) ein elastischer Teller ist, dessen Lippe sich in der Hilfskammer (4) befindet.

6. Vorrichtung nach Anspruch 2 oder 4, dadurch gekennzeichnet, daß die Einwegdichtung (3) ein ringförmiges Segment ist, das in die Bohrung (32) eingespännt und schwebend zwischen zwei Anschlägen (9, 10) angebracht ist, die am Umfang des Stößels (25) zwischen der ersten Kammer (5) und der Hilfskammer (4) vorgesehen sind, wobei der der Hilfskammer (4) zugewandte Anschlag (9) durchbohrt ist, während der der ersten Kammer (5) zugewandte Anschlag (10) massiv ist.

## Claims

1. Hydraulic booster device for a brake circuit, comprising a body (30) pierced with a bore (32), in which slide coaxially a pusher (25) controlled by a brake pedal and a piston means (34) located between first (5) and second chambers containing a brake fluid, the first chamber (5) receiving at least one spring (51, 52) which loads the pusher (25) and the piston means (34) away from one another, the first and second chambers being connected to sources of fluid under low pressure and under high pressure by valve means, characterized in that an auxiliary chamber (4) of a volume variable as a function of the position of the pusher (25), made in said bore (32), communicates with said first chamber (5), on the one hand permanently by means of a restriction (6) and on the other hand by an auxiliary valve means (3) allowing communication during an increase in the volume of the auxiliary chamber (4) and preventing it during a reduction of the latter.

2. Device according to Claim 1, characterized in that said auxiliary chamber (4) is an annular chamber made between said pusher (25) and the bore (32) and is separated from said first chamber (5) by a one-way gasket (3).

3. Device according to Claim 2, characterized in that the one-way gasket (3) consists of a ball seated in said auxiliary chamber (4) and capable of closing a duct (12) made between the first chamber (5) and the auxiliary chamber (4).

4. Device according to Claim 1, characterized in that said auxiliary chamber (4) is made inside the first chamber (5) and is determined by the volume provided between a rod (80) sliding in a cylinder (17), the rod and cylinder being fastened one to the piston (34) and the other to the pusher (25), if appropriate by means of an intermediate piece (20), the free end (10) of the rod (80) carrying a one-way gasket (3), and the space (6) between the free end of the cylinder (17) and the wall of the rod (80) forming said restriction.

5. Device according to Claim 2 or 4, characterized in that the one-way gasket (3) is an elastic cup, the lip of which is located in said auxiliary chamber (4).

6. Device according to Claim 2 or 4, characterized in that the one-way gasket (3) is an annular segment gripped in said bore (32) and floating between two stops (9, 10) provided on the periphery of said pusher (25) between the first chamber (5) and the auxiliary chamber (4), the stop (9) located opposite the auxiliary chamber (4) being pierced, whereas that (10) located opposite the first chamber (5) is solid.
